# EUROPEAN PATENT SPECIFICATION

(11) **EP 4 499 880 B1**
(45) Date of publication and mention of the grant of the patent: **10.06.2026**
(21) Application number: 23715138.6
(22) Date of filing: 29.03.2023
(51) Int. Cl.: F27D 17/20, F27D 17/30

(54) **PROCESS FOR REDUCING FOSSIL CO2 EMISSIONS**
VERFAHREN ZUR REDUZIERUNG VON FOSSILEN CO2-EMISSIONEN
PROCÉDÉ DE RÉDUCTION D'ÉMISSIONS DE CO2 FOSSILE

(30) Priority: 29.03.2022 LU 501739
(43) Date of publication of application: 05.02.2025
(73) Proprietor: Paul Wurth S.A., 1122 Luxembourg (LU)
(72) Inventor: SPADONI, Luca, 16148 Genova (IT); MICHELETTI, Lorenzo, 57022 Castagneto Carducci (Livorno) (IT); OLCESE, Alessandro, 16043 Chiavari (Genova) (IT); FOSSATI, Davide, 16132 Genova (IT); VENEZIANO, Francesco, 16035 Rapallo (Genova) (IT); MATINO, Ismael, 56124 Pisa (PI) (IT); ZACCARA, Antonella, 56017 San Giuliano Terme (PI) (IT); PETRUCCIANI, Alice, 54014 Casola in Lunigiana (MS) (IT); COLLA, Valentina, 56017 San Giuliano Terme (PI) (IT); BRANCA, Teresa Annunziata, 56124 Pisa (PI) (IT)
(74) Representative: Office Freylinger
(86) International application number: PCT/EP2023/058163
(87) International publication number: WO 2023/186993

(56) References cited:
- YU P LUZIN ET AL: "Removal of cyanides from blast-furnace gas and wastewater", STEEL IN TRANSLATION, ALLERTON PRESS, INC, HEIDELBERG, vol. 42, no. 7, 26 October 2012 (2012-10-26), pages 606 - 610, XP035130085, ISSN: 1935-0988, DOI: 10.3103/S0967091212070054
- BLOEM W B ET AL: "IMPROVEMENT OF A COKE-OVEN-GAS DESULFURIZATION PROCESS", REVUE DE METALLURGIE- CAHIERS D'INFORMATIONS TECHNIQUES,, vol. 87, no. 2, 1 February 1990 (1990-02-01), pages 129 - 135, XP000135287, ISSN: 0035-1563
- GALLO P A ET AL: "BIOLOGICAL TREATMENT OF BLAST FURNACE BLOWDOWN AT AK STEEL", AISE STEEL TECHNOLOGY, AISE, PITTSBURG, PA, US, vol. 75, no. 5, 1 May 1998 (1998-05-01), pages 34 - 38, XP000750956, ISSN: 0021-1559

## Description

### Technical field

The present invention generally relates to the operation of a metallurgical plant and in particular to a process which allows reducing fossil CO₂ emissions.

### Background Art

The major amount of the CO₂ released into the atmosphere today comes from the combustion of fossil fuel. The iron and steel industry is among the biggest industrial emitters of greenhouse gases, especially CO₂, accounting for 4 % - 7 % of anthropogenic CO₂ emissions globally. Even though in the past 40 years the European steelmaking industry reduced its energy consumption of about 50 %, further reductions are desirable from an environmental and economic points of view and increasingly legally mandatory.

The references "Best Available Techniques" (BAT) for Iron and Steel and their conclusions are the most important references for health and environmental limits applied by all European countries in their legislations.

As an example, according to the European regulation on the European Trading Scheme (ETS, directive 2003/87/CE), a cap and trade mechanism, the avoided CO₂ emissions represent CO₂ allowances which can be sold to other companies. In this way, the decrease of the CO₂ emissions, besides a positive effect on the climate, results in a decrease of the expenses or an increase of the earnings.

Since most actors are facing severe problems to be compliant with the mentioned regulation, this issue is very important in order to avoid undesired consequences on proper plant operation. Moreover, all health and environment topics are expected to be increasingly crucial in the future, both in most advanced countries and in newly industrialized and developing ones. In fact, some restrictions are going to be implemented even in important steel producing countries outside the EU (ref. for example to Zero Liquid Discharge foreseen in MOEF draft, India, dated March 18^{th}, 2016).

YU P LUZIN ET AL: "Removal of cyanides from blast-furnace gas andwastewater" discloses that experiments confirm that ozone provides the optimal means for the minimization or elimination of cyanide releases from the water-supply cycle of blast furnaces. The cyanides are completely decomposed,with no wastes and without the need for other reagents.

### Technical problem

It is therefore an object of the present invention to propose a process for operating at least part of a metallurgical plant in a way allowing the reduction of fossil CO₂ emissions.

### General Description of the Invention

In order to achieve the above-mentioned object, the present invention proposes, in a first aspect, a process for operating an oxidizable combustion gas cleaning unit in a metallurgical plant, comprising the steps of:
(a) passing an oxidizable combustion gas from a metallurgical reactor, in particular a blast furnace gas from a blast furnace, in a packed bed scrubber arrangement through a packed bed in counter-current with a washing water or in a spray scrubber arrangement to remove cyanide compounds, in particular hydrogen cyanide, and to increase the removal of chloride compounds, in particular hydrogen chloride, from said combustion gas by solubilizing said cyanide and chloride compounds in said washing water,
(b) collecting the washing water containing solubilized cyanide and chloride compounds at a bottom of the packed bed or spray scrubber arrangement, and
(c) collecting a cleaned oxidizable combustion gas at a top of the packed bed or spray scrubber arrangement,
wherein a base is added to the washing water before step (a), said base being preferably chosen among oxides and hydroxides of alkali metals and alkaline earth metals, in particular among NaOH, KOH, Ca(OH)₂ or mixtures thereof, most preferably the base is NaOH, which is added between 3.5 % and 6.5 %, preferably between 4.5 % and 5.5 %, above the stoichiometric amount with respect to the cyanide and chloride compounds, in particular hydrogen cyanide and hydrogen chloride, to be removed from the oxidizable combustion gas.

The inventors have found that by reducing the contents of cyanide compounds, in particular hydrogen cyanide, in an oxidizable combustion gas from metallurgical reactors, such as blast furnace gas, prior to using them in a hot blast stove unit for hot blast generation allows heating the blast at higher temperatures without exceeding allowable NOx contents at the chimney when the so combusted gas is released to the atmosphere. Higher hot blast temperatures will result in a significant reduction in fuel/coke consumption within the metallurgical reactor. The inventors estimate that, depending on average cyanide compounds in the blast furnace gas, an increase up to 150°C can be achieved in operating an otherwise identical metallurgical plant with the process of the invention. Realizing that every increase of 10 °C allows decreasing the coke rate by approximately 1 kg/t of hot metal, an overall fossil CO₂ emission reduction up to 48 kg CO₂/tonne hot metal can be achieved without compromising the proper operation of the metallurgical reactor. The advantage of reducing cyanide compounds from the blast furnace gas can also be of benefit for other processes wherein blast furnace gas is used as fuel for combustion.

Moreover, the removal of the cyanide compounds before combustion in the hot blast stove unit allows for a more flexible control of the hot blast generation by taking into account varying contents of nitrogen sources in the fuel fed to the metallurgical reactor. Cyanide compounds in the context of the invention stem from the fossil fuel used in the metallurgical reactor or are formed during the metallurgical process from nitrogen including compounds contained within said fuel. Cyanide compounds can be inorganic or organic. Inorganic compounds may be simple (e.g. HCN, KCN) or even complexed by metal species.

The publication "Removal of cyanides from blast-furnace gas and wastewater" Steel in translation, Allerton Press, Inc, Heidelberg, vol. 42, no. 7, pages 606-610; 26 October 2012, describes a method to treat and clean blast furnace gas, by removing cyanides compounds that are formed inside the blast furnace. The blast furnace gas is treated through a wet scrubber that is able to remove solid cyanide species, such as salts, by dissolution in water. The resulting washing water is treated with ozone to avoid side reactions between the solubilized cyanides, CN⁻, and the acidic components present in the blast furnace gas that may dissolve in water such as CO₂. However, contrary to the present invention, the method disclosed in this publication does not allow for significantly capturing gaseous HCN already present in the blast furnace gas, nor does it allow for effectively preventing gaseous HCN from reforming within the wastewater.

Besides the cyanide compounds removal, an increased removal of chloride compounds, such as hydrogen chloride, from the oxidizable combustion gas is obtained with the proposed scrubber. Hydrogen chloride derives from the coal combustion and it is partially removed in the common cleaning system of the oxidizable combustion gas, generally devoted to dust removal. However, an increased removal is desirable to decrease the corrosion of the equipment crossed by the said gas.

In the context of the invention, two scrubber arrangements can be applied: packed bed or spray.

The packed bed scrubber arrangement generally comprises a column containing one or more layers of variously-shaped packing material, such as Raschig rings, spiral rings, Berl saddles, etc., that provide a large surface area for liquid-gas contact. The bed packing(s) may be held in place by wire mesh retainers and are generally supported by at least one plate near the bottom of the scrubber arrangement. Washing water is evenly introduced above the bed packing and flows down through the bed. The washing water coats the packing and establishes a thin film providing exchange surface for cyanide and chloride compounds dissolution. Advantageously, the packed bed scrubber arrangement contains one or more intermediate plates defining a redistribution zone without packing bed, thereby dividing the packed bed into a plurality of superposed packed bed zones, where the film of washing water is forced to drip off and redistribute to the next packed bed.

The spray scrubber arrangement generally includes a column with different spray stages having different number and configurations of nozzles distributed on ramps. In particular, nozzles dimensions, numbers and configurations guarantee the following needs: a suitable dimension of droplets allowing a high gas/liquid surface area, a compromise between spray overlapping and water losses on the spray column wall and higher amount of washing water in the spray stages nearest at the inlet of the gas to be treated which is richer of hydrogen cyanide and of hydrogen chloride. Droplets of washing water in contact with gas are able to absorb cyanide and chloride compounds. The multistage configuration allows an independent management of each stage depending on the amount of cyanides and chlorides to be removed.

In both scrubber arrangements, the oxidizable combustion gas flows up the column, i.e. in countercurrent to the washing water flowing down by gravity. Moreover, a demister at the top of the column is recommended in order to abate entrained droplets.

In advantageous embodiments, the packed bed scrubber arrangement useable in the process of the invention comprises, a column including a random packed bed unit, optionally comprising a plurality of packed bed zones separated by redistribution zones, the packed bed unit being supported by at least one perforated support plate, a washing water spray distributor arranged above said packed bed for distributing the washing water into the packed bed unit, a washing water collecting unit arranged at the bottom end of the packed bed scrubber arrangement below the packed bed, said washing water collecting unit comprising a duct for draining the washing water containing cyanide and chloride compounds from the packed bed scrubber arrangement, a gas feeding unit arranged for feeding the oxidizable combustion gas into the column below the packed bed unit, and an oxidizable combustion gas discharge unit on the top of the packed bed column comprising a duct for discharging the cleaned oxidizable combustion gas and preferably placed after a mist eliminator.

In some embodiments, the packed bed scrubber arrangement is configured such that the washing water to oxidizable combustion gas ratio in the packed bed (comprising all packed bed zones in case of one or more redistribution zone(s)) in step (a) is between 3.5 and 6.5 L/Nm³, preferably said ratio is between 4.5 and 5.5 L/Nm³, most preferably said ratio is approximately 5.1 L/Nm³.

In some embodiments, the packed scrubber arrangement is configured such that the mean residence time of the combustion gas in the packed bed in step (a) is between 3.4 and 5.8 s, preferably between 4.1 and 5.1 s. The mean residence time has its usual meaning in the field and represents the average duration of time during which a determined quantity of gas needs to flow from the bottom of the packed bed unit to its top.

In some embodiments, the packed scrubber arrangement is configured such that the packed bed has a total (wet) contact surface, i.e. the total surface of the (wet) packed bed can be in contact with the oxidizable combustion gas, between 0.09 and 0.15 m²/(Nm³/h), preferably between 0.11 and 0.13 m²/(Nm³/h).

The packed bed scrubber arrangement is operated at near atmospheric pressure, such as at 0.02 to 0.2 barg, preferably between 0.06 to 0.1 barg. The temperature inside the packed bed is well below the water boiling temperature, preferably between ambient temperature and 70 °C, in particular between 35 and 55 °C. The packed bed scrubber arrangement can also be operated at a higher pressure (up to 2.5 barg) and at higher temperature.

In advantageous embodiments, the spray scrubber arrangement useable in the process of the invention comprises a column including at least four independent spray stages distributed along the height of the column and composed of a set of nozzle units located on multiple ramps and distributing of the washing water in the form of suitable droplets, said globally spray section unit, a gas feeding unit arranged for feeding the oxidizable combustion gas into the column below spray section unit and preceded by a by-pass, external to the column unit, in order to regulate the flow amount of oxidizable combustion gas going to the hot stoves to be treated in the spray scrubber, a washing water collecting unit arranged at the bottom end of the spray scrubber arrangement below the spray section unit and the gas feeding unit, said washing water reservoir unit comprising a duct for draining the washing water containing cyanide and chloride compounds from the spray scrubber arrangement, and an oxidizable combustion gas discharge unit on the top of the spray column comprising a duct for discharging the cleaned oxidizable combustion gas and placed after a mist eliminator.

In some embodiments, the spray scrubber arrangement is configured such that the globally exploited washing water, namely the sum of all the washing water distributed in the different spray stages, to oxidizable combustion gas ratio in step (a) is between 0.8 and 2.9 L/Nm³, depending on the amount of cyanide and chlorides to be removed and on the desired removal and in order to manage the concentration of cyanides and chlorides in the washing water. The preferred value of that ratio is between 1.3 and 1.5 L/Nm³.

In some embodiments, the spray scrubber arrangement is designed such that the mean residence time of the combustion gas in the spray section unit in step (a) is between 2 and 8 s, preferably between 3 and 4 s. The high variation depends on the amount of oxidizable combustion gas to be treated time by time and on its temperature; in more common conditions residence time is comprised in the second range (3 - 4 s). The mean residence time has its usual meaning in the field and represents the average duration of time during which a determined quantity of gas needs to flow from the bottom of the spray section unit to its top.

In some embodiments, the nozzles of the spray scrubber arrangements are axial flow full cone nozzles providing droplets having a Sauter mean diameter between 1100 and 1150 µm through a proper setup of the nozzle pressure.

The spray scrubber arrangement is operated at near atmospheric pressure, such as at 0.03 to 0.2 barg, preferably between 0.06 to 0.1 barg. The temperature inside the spray column is well below the water boiling temperature, preferably between ambient temperature and 70 °C, in particular between 35 and 55 °C. The spray scrubber can also be operated at higher pressure (up to 2.5 barg) and at higher temperature.

Generally, the washing water can be any industrial water available at the plant. While the washing water may be any industrial water, it is useful to adjust its pH before its use in step (a). Hence, a base is added to the washing water in step (a), said base being preferably chosen among oxides and hydroxides of alkali metals and alkaline earth metals, in particular among NaOH, KOH, Ca(OH)₂ or mixtures thereof. In some embodiments, it is particularly preferred that the base is NaOH, added between 3.5% and 6.5%, preferably between 4.5% and 5.5%, above the stoichiometric amount with respect to the hydrogen cyanide and hydrogen chloride to be removed from the oxidizable combustion gas.

For plants already integrating a wet dust abatement unit to remove dust from the oxidizable combustion gas, it is particularly advantageous that the water consumption actually remains unchanged by adding the following steps to the above process:
(d) feeding the washing water from step (b) (possibly added by further water if the water used in step (a) is only a part of the whole available washing water) to the dust abatement unit to reduce dust contents of the oxidizable combustion gas upstream of the scrubber arrangement in step (a), and
(e) collecting dust abatement water from step (d) containing the dust abated in the dust abatement unit.

In still further preferred embodiments, it may be advantageous to (again) adjust the pH of the washing water from step (b) before its use in step (d). Hence, in some embodiments, a base is added to the washing water before its use in step (d), said base being preferably chosen among oxides and hydroxides of alkali metals and alkaline earth metals, in particular among NaOH, KOH, Ca(OH)₂ or mixtures thereof. In some embodiments, it is particularly preferred the base is NaOH, added to reach a pH between 9.75 and 11, nearer to 11 is preferable, which prevents the free cyanides volatilization. This (further) addition of a base is more advantageous when the content of cyanide compounds is (expected or known to be) higher than average.

Such scrubber arrangements are of particular use in the processes of the invention to achieve an appropriate reduction of the cyanide compounds within the oxidizable combustion gas, thereby allowing operating downstream hot stove units at higher temperatures, thus reducing the fossil energy requirements in the metallurgical reactor and hence the fossil CO₂ emissions.

These further objects of the invention are achieved with a second aspect of the invention, which proposes a process for operating a metallurgical plant, wherein an oxidizable combustion gas from a metallurgical reactor, in particular a blast furnace gas from a blast furnace, having been cleaned in a scrubber for the removal of cyanides and chlorides as described here and in a dust removal process as described herein and, is (h) fed to a hot blast stove unit and burned in said hot blast stove unit arranged for preheating blast blown into said metallurgical reactor, wherein the temperature of the burning of the cleaned oxidizable combustion gas is managed to control NOₓ emissions released to atmosphere, the preheated blast being preferably thereafter (i) injected into the metallurgical reactor, in particular the blast furnace. The control of the NOₓ emissions is enhanced by the use of the cleaned oxidizable combustion gas, in that higher burning temperatures can be used without increasing the NOₓ contents above the values obtained without cleaning and more importantly without exceeding NOₓ emission limits at the release into the atmosphere.

In other words, the second aspect of the invention, includes also the first aspect related to a process for cleaning an oxidizable combustion gas, which is then used in the process for operating a metallurgical plant constituting the second aspect and described in the previous paragraph.

The third aspect of the invention is related to the treatment of washing water for the decrease of the cyanide content after the removal of cyanide compounds from the oxidizable combustion gas. This allows avoiding the cyanide accumulation in washing water that can be so reused in the circuit with consequent reduction of used fresh water. Moreover, regulatory limits are respected in case of blowdowns.

In the context of the third aspect of the invention, in some embodiments, the process comprises the step of:
(f) treating the washing water from step (b) to remove cyanide compounds, in particular free cyanides.

Oxidation processes are based on the exploitation of H₂O₂ or SO₂ and air and a Cu catalyst; the oxidation process through H₂O₂ and Cu catalyst is preferred due to its lower CAPEX and OPEX as well as its easier management and greener nature.

In advantageous embodiments, the oxidation processes based on the exploitation of H₂O₂ and Cu catalyst is carried in two continuous mixed reactor arrangements in series with the biggest reactor arrangement in series to the smallest. Each reactor arrangement useable in the oxidation process of the invention includes a vertical tank including, an impeller unit, an impeller engine unit, a baffle unit for a better agitation and to prevent the formation of vortex, a duct for washing water feeding, said washing water feeding unit, placed near to the top of the vertical tank unit, a duct placed at the bottom of the vertical tank unit for draining the treated washing water, said washing water outlet unit, and reagents and catalyst feeding unit placed at the top of the reactor arrangement.

In some embodiments, the two reactor arrangements in series are designed such that the residence time of the washing water in the reactors is between respectively 40 and 65 minutes for the first reactor arrangement and 45 and 85 minutes for the second reactor arrangement, preferably 50 minutes for the first reactor arrangement and 60 minutes for the second reactor arrangement.

In some embodiments, H₂O₂ dosage is comprised between 0.35-0.55 g of H₂O₂ (30% wt.) per liter of washing water to be treated.

In some embodiments, Cu-based catalyst is dosed in order to have a concentration of 40 mg/L of Cu²⁺ in the washing water to be treated.

In some embodiments, pH of the washing water to be treated is preferred to be adjusted to 10 with the addition of a base (if starting pH is lower), preferably NaOH.

In some embodiments, pitched blade impellers with blade angle of 45° are preferred to guarantee a combination of radial and axial flows and higher shear levels. An impeller speed between 20 and 25 rpm is preferred.

The reactor is operated at atmospheric pressure and the temperature inside it is generally 30°C.

In further embodiments, the dust abatement water from step (e) is thereafter generally treated in a water treatment unit to separate water from the dust and to remove further contaminants. After the treatment, water is partially purged and after make-up water addition is recirculated to the gas treatment. The blowdown is preferred to be treated in step (g) to remove residual cyanides from step (e). The same oxidation process of step (f) is used or preferably activated carbon filters are exploited.

### Brief Description of the Drawings

Preferred embodiments of the invention will now be described, by way of example, with reference to the accompanying drawings in which:
Fig. 1 is a cross sectional view of an embodiment of a packed scrubber arrangement useful in the present invention;
Fig. 2 is a cross sectional view of an embodiment of a spray scrubber arrangement useful in the present invention;
Fig. 3 is a cross sectional view of an embodiment of an oxidation reactor arrangement useful in the present invention;
Fig. 4 represents graph of some simulation data collected on the cleaning efficiency of the two scrubber arrangements.
Fig. 5 represents graph of some simulation data collected on the cleaning efficiency of the oxidation reactors.
Fig. 6 is a block schematic process flow diagram of a metallurgical plant integrating the solution as described herein.

Further details and advantages of the present invention will be apparent from the following detailed description of several not limiting embodiments with reference to the attached drawings.

### Description of Preferred Embodiments

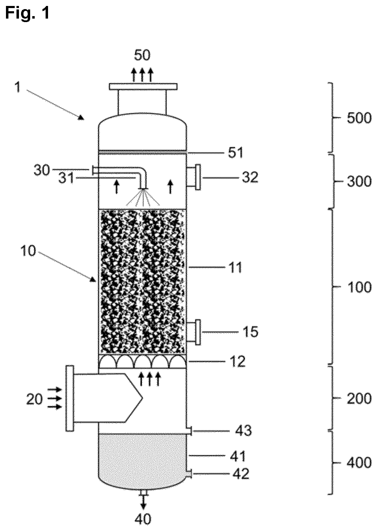

Fig. 1 shows a cross sectional view of a packed scrubber 1 useful for cleaning an oxidizable combustion gas, such as blast furnace gas. The oxidizable combustion gas enters through the inlet 20 at the bottom of the scrubber's column 10 and flows up through the packed bed 11 supported by support plate or baffle 12 towards the cleaned oxidizable combustion discharge unit at the top of column 10. The washing water enters the washing water distributor unit 300 through washing water duct 30, is distributed over the packed bed by a washing water spraying device 31 and flows by gravity in countercurrent to the oxidizable combustion gas, from top to the bottom through the packed bed 11 where the cyanide and chloride compounds are absorbed by the washing water.

The packing of the packed bed 11 can be of any known type randomly oriented (random packings) in the column 10 above the perforated support plate 12 (the packing material could be random with specific surface of 65 m²/m³ and % empty of 72%), depending on the particular operating conditions and other constraints.

The column is generally composed of a vertical cylindrical shell containing a support plate 12 for the packing material that is perforated and optionally further liquid distributing devices (not shown in Fig. 1) designed to provide still more effective irrigation of the packed bed.

Further redistributing devices, such as intermediate baffles, can be provided at one or more different height of the packed bed to redistribute the washing water forcing it to form drops and so redistribute again over the packed bed zone located underneath.

The moisture and droplets carried over by the cleaned oxidizable combustion gas are preferably removed by a mist separator 51 well known in state of art for this application so that the cleaned gas can flow via the cleaned oxidizable combustion gas discharge port 50 to the hot stove (not shown on Fig. 1) through devoted ducting.

The washing water, containing the dissolved cyanides (mostly free CN⁻) and chlorides, is drained in the washing water collecting unit 400 forming a liquid storage 41 at the bottom of the chamber 10 and delivered through drain 40 to a devoted treatment e.g. by means of pumps. The washing water collecting unit 400 preferably also integrates a pump suction 42 and an over flow orifice 43.

For installation and maintenance reasons, manholes, such as a manhole for packed bed maintenance 15 or a manhole for maintenance of the washing water spray distributor (unit) 32, are preferably provided within the shell of the chamber 10.

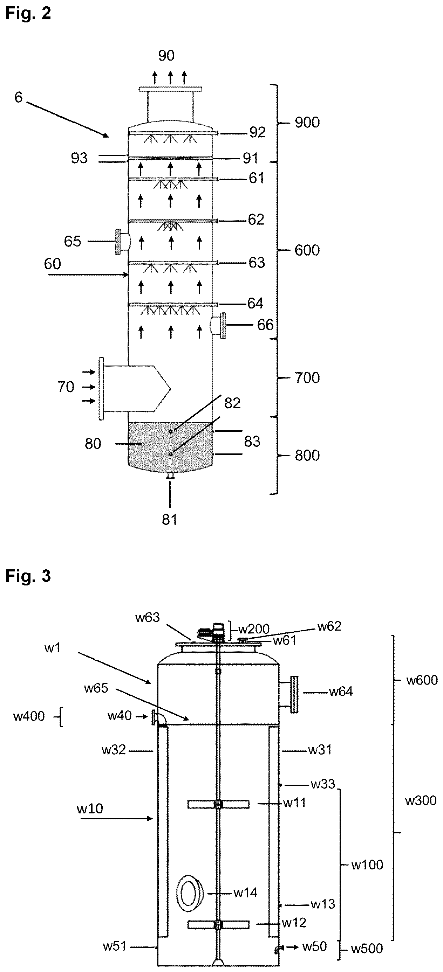

Fig. 2 shows a cross sectional view of a spray scrubber 6 useful for cleaning an oxidizable combustion gas, such as blast furnace gas. It is generally constituted of a vertical cylindrical shell.

The oxidizable combustion gas enters through the inlet 70 near to the bottom of the scrubber's column 60 and flows up through the spray section unit 30 towards the cleaned oxidizable combustion discharge unit 900 at the top of column 60.

The washing water enters through several nozzles placed on ramps that constitute the spray stages 61, 62, 63 and 64 and flows by gravity in countercurrent to the oxidizable combustion gas, from top to the bottom and the formed droplets allows the absorption of the cyanide and chloride compounds by the washing water.

The nozzles in the spray stages 61, 62, 63 and 64 are preferably axial-flow full cone nozzles to provide uniform liquid distribution over the whole circular area. Nozzles are arranged following the offset configuration in order to have a compromise between spray overlapping and water losses on the spray section unit 600 wall. The number of nozzles placed in spray stages 63 and 64 is generally higher than in spray stages 61 and 62 because of the higher proximity of spray stages 63 and 64 to the gas feeding duct which corresponds to the point of highest content of cyanide and chloride compounds in the oxidizable combustion gas.

The moisture and droplets carried over by the cleaned oxidizable combustion gas are preferably removed by a mist separator 91 well known in state of art for this application, such as Chevron type, so that the cleaned gas can flow via the cleaned oxidizable combustion gas discharge duct 90 to the hot stove (not shown on Fig. 1). Pressure drops in the demister are generally monitored for managing its cleaning and for this reason pressure losses sensor connections 93 and liquid distributors for mist separator flushing 92 are provided.

The washing water, containing the dissolved cyanides (mostly free CN⁻) and chlorides, is collected in the washing water reservoir unit 800 forming a liquid storage 80 at the bottom of the column 60 and discharged through the washing water discharge 81 to flow do a devoted treatment e.g. by means of pumps. The washing water collecting unit also integrates liquid level visual indicators 82 and liquid level sensor connections 83.

For installation and maintenance reasons, man inspection holes 65 and 66, are preferably provided within the shell of the column 60.

Fig. 3 shows a cross sectional view of a continuous mixed oxidation reactor for removing cyanide compounds, especially free cyanides, from gas washing water. It is generally constituted of a vertical tank w10.

The washing water enters through the inlet duct w40 near to the top of the reactor tank w10 and to the maximum allowed liquid level w65 (level is monitored through the sensors installed on the connections w13 and w33) and it is mixed with the reagents, such as H₂O₂ and possible antifoaming agent, and Cu-based catalyst.

The mixing is carried out through the impellers w11 and w12 that preferably are pitched blade impellers with blade angle of 45°; the impellers are activated with a dedicated engine w200. Agitation is improved and vortexes are avoided through four baffles such as the two baffles w31 and w32 depicted in Fig. 3.

The treated washing water is then drained through the drain duct w50 and send to the dust abatement unit (not showed in figure).

Possible gas and vapor are released through dedicated vent w62 placed at the top of the reactor tank w1 and in case of emergency, for instance due to increase of pressure in the reactor, safety valves w63 are provided. A pressure sensor connection w61 is provided at the top of the reactor w10. While a pH and temperature sensor connections are provided near to the bottom of the tank w10.

For installation and maintenance reasons, man inspection holes w14 and w64, are preferably provided within the shell of the tank 10.

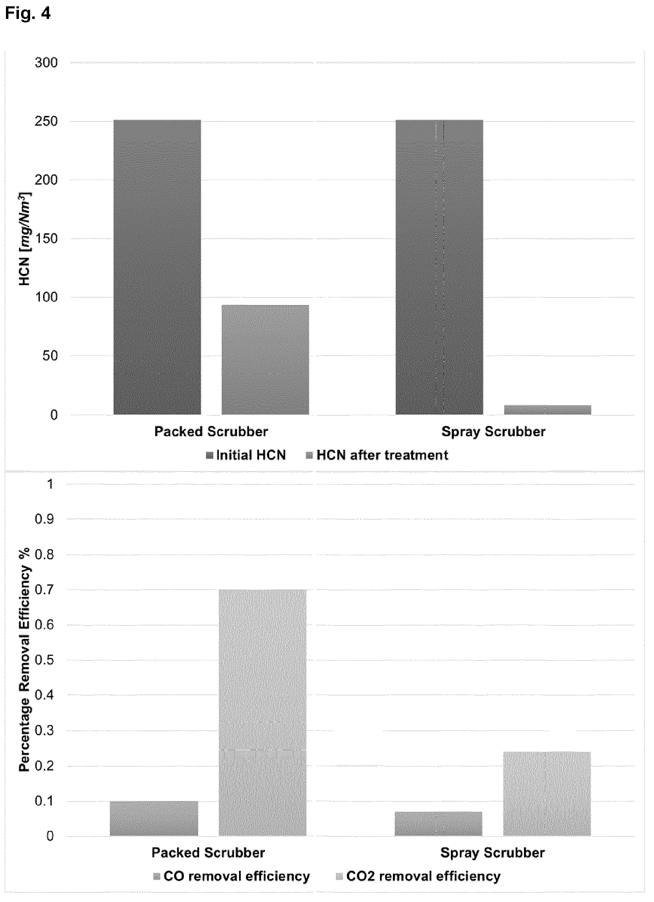

Fig. 4 illustrates the results obtained with the cleaning of a blast furnace gas through packed and spray scrubbers and by using washing water added of NaOH in an amount 5% greater than the stoichiometric amount with respect to hydrogen cyanide and hydrogen chloride to be removed.

As shown, up to 63 % of HCN reduction in blast furnace gas can be reached by using packed scrubber, while up to 97% through the spray scrubber. The added amount of NaOH helps the absorption and it is sufficiently low to be selective towards cyanide and chloride compounds and to avoid the side effect of dissolving other acid components present in the blast furnace gas (e.g. CO₂ which is highly present in blast furnace gas, e.g. 20 - 24 %). The HCN reacts with OH⁻ to form CN⁻ and H₂O. In parallel the CN⁻ present in wastewater can also react with acidic compounds initially present in the blast furnace gas and that may have been dissolved during the wet scrubbing treatment, to form HCN. For example, this reaction can occur when the CO₂ initially present in the blast furnace gas is entrained in the washing water forming carbonic acid species, which in turn will react with cyanides to form unwanted HCN. The adjustment of the base concentration prevents other acids, such as dissolved CO₂, to react with the CN⁻ species and again produce gaseous HCN. Therefore, the process is not only able to efficiently remove solid cyanide species, but also HCN and HCl from the blast furnace gas.

CO and CO₂ removal is respectively 0.10% and 0.70% for the packed scrubber, while 0.24% and 0.07% for the spray scrubbed, confirming the added amount of base is sufficiently low to be selective towards cyanide and chloride.

HCl removal is not shown in figure but it is almost 100% for packed scrubber and up to 96% for spray scrubber.

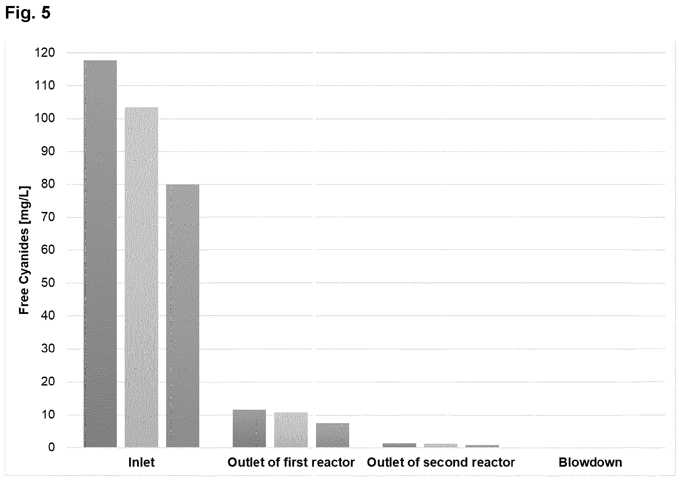

Fig. 5 shows the results obtained in the removal of free-cyanides from gas washing water in an oxidation treatment based on the use of H₂O₂ and Cu-based catalyst. Three different starting cyanides contaminations are reported as well as the behavior of its content during the different stage of the treatment. Between 89.5 and 90.7 % of the initial cyanides amount is removed in the first reactor and a value below to 1.5 mg/L and 0.2 mg/L are obtained respectively after the second reactor and in the treated blowdown.

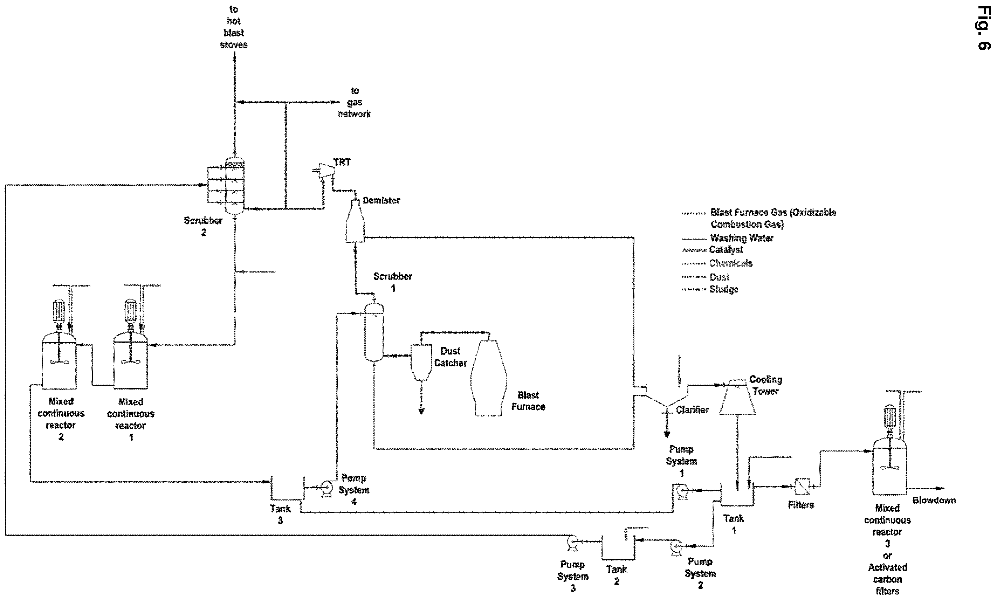

Fig. 6 depicts a process flow diagram of an embodiment of a metallurgical plant integrating the solution as described herein. Three main sections can be observed: the blast furnace that generate the blast furnace gas (oxidizable combustion gas), the gas treatment section and the washing water treatment section.

The gas treatment section includes a first area for dust removal (i.e. dust catcher, scrubber 1 and demister), a TRT for energy recovery from the expansion of the gas and the scrubber 2 that allows the removal of cyanides and chlorides as described in the present invention. The treated gas from scrubber 2 is then send to hot blast stoves. The pretreated gas exiting the first area after dust removal, contains cyanide and chloride species that are sent to the scrubber 2. One advantage of the first area, is that the gas sent to scrubber 2 has a lower temperature, thereby enhancing the efficiency of the cyanide and chloride removal, more specifically the removal of HCN and HCl, when treated in the scrubber 2. The cleaned treated gas may further be sent to hot blast stoves and/or to gas network to be further used as fuel gas.

The washing water treatment section is composed of the two mixed continuous reactors 1 and 2 to remove the absorbed cyanide compounds from gas washing water and of a further subsection (i.e. clarifier, cooling tower, filters) to treat the water coming from the scrubber 1; a final blowdown treatment is provided and it is constituted by a further oxidation reactor (as shown in figure) or preferably by activated carbon filters that are suitable to remove low amount of residual cyanides. The absorbed cyanide compounds are treated in the mixed continuous reactors 1 and 2 in the presence of an appropriate catalyst, such as a Cu-based catalyst, and reagents such as H₂O₂, to destroy the cyanide compounds and thereby to avoid unwanted (re)formation of HCN inside the circulating water. The treated water is further recycled/sent to scrubber 1. The resulting washing water is then advantageously treated in a clarifier to remove sludge, cooled in a cooling tower. On part is further sent back to scrubber 1 and scrubber 2, while another portion is treated in a mixed continuous reactor 3 by oxidation or by activated carbon filters.

Some tanks and pump systems are depicted in the figure to better manage the process described in the present invention.

### Legend:

- 1: packed scrubber arrangement
- 10: column
- 100: packed bed unit
- 11: packed bed
- 12: perforated support plate or baffle
- 15: manhole for packed bed maintenance
- 200: gas feeding unit
- 20: gas feeding duct
- 300: washing water spray distributor (unit)
- 30: washing water duct
- 31: washing water spraying device
- 32: manhole for maintenance of the washing water spray distributor
- 400: washing water collecting unit
- 40: drain
- 41: liquid storage
- 42: pump suction
- 43: over flow orifice
- 500: cleaned oxidizable combustion gas discharge unit
- 50: cleaned oxidizable combustion gas discharge duct
- 51: mist separator
- 6: spray scrubber arrangement
- 60: column
- 600: spray section unit
- 61: spray stage (nozzles on ramps)
- 62: spray stage (nozzles on ramps)
- 63: spray stage (nozzles on ramps)
- 64: spray stage (nozzles on ramps)
- 65: man inspection hole for nozzles maintenance
- 66: man inspection hole for nozzles maintenance
- 700: gas feeding unit
- 70: gas feeding duct
- 800: washing water reservoir unit
- 80: liquid storage
- 81: washing water discharge
- 82: liquid level visual indicators
- 83: liquid level sensor connections
- 900: cleaned oxidizable combustion gas discharge unit
- 90: cleaned oxidizable combustion gas discharge duct
- 91: mist separator
- 92: liquid distributors for mist separator flushing
- 93: pressure losses sensor connections
- w1: continuous mixed oxidation reactor arrangement
- w10: vertical tank
- w100: impeller unit
- w11: impeller
- w12: impeller
- w13: level sensor connection
- w14: man inspection hole
- w200: impeller engine unit
- w300: baffle unit
- w31: baffle
- w32: baffle
- w33: level sensor connection
- w400: washing water feeding unit
- w40: washing water inlet duct
- w500: washing water outlet unit
- w50: cleaned washing water drain duct
- w51: pH sensor connection
- w600: reagents and catalyst feeding unit
- w61: reagents and catalyst inlet and pressure sensor connection
- w62: vent
- w63: safety valves
- w64: man inspection hole
- w65: maximum liquid level

## Claims

1. A process for operating an oxidizable combustion gas cleaning unit in a metallurgical plant, comprising the steps of:
(a) passing an oxidizable combustion gas from a metallurgical reactor, in particular a blast furnace gas from a blast furnace, in a packed bed scrubber arrangement through a packed bed in countercurrent with a washing water or in a spray scrubber arrangement to remove cyanide compounds, in particular hydrogen cyanide, and to increase the removal of chloride compounds, in particular hydrogen chloride, from said combustion gas by solubilizing said cyanide and chloride compounds in said washing water,
(b) collecting the washing water containing solubilized cyanide and chloride compounds at a bottom end of the packed bed or spray scrubber arrangement, and
(c) collecting a cleaned oxidizable combustion gas at a top of the packed bed or spray scrubber arrangement,
wherein a base is added to the washing water before step (a), said base being preferably chosen among oxides and hydroxides of alkali metals and alkaline earth metals, in particular among NaOH, KOH, Ca(OH)₂ or mixtures thereof, most preferably the base is NaOH, which is added between 3.5 % and 6.5 %, preferably between 4.5 % and 5.5 %, above the stoichiometric amount with respect to the cyanide and chloride compounds, in particular hydrogen cyanide and hydrogen chloride, to be removed from the oxidizable combustion gas.

2. The process as claimed in claim 1, wherein the packed bed scrubber arrangement comprises, a column comprising a random packed bed unit, optionally comprising a plurality of packed bed zones separated by redistribution zones, the packed bed unit being supported by at least one perforated support plate, a washing water spray distributor arranged above said packed bed for distributing the washing water into the packed bed unit, a washing water collecting unit arranged at the bottom end of the packed bed scrubber arrangement below the packed bed, said washing water collecting unit comprising a duct for draining the washing water containing cyanide compounds from the packed scrubber arrangement, a gas feeding unit arranged for feeding the oxidizable combustion gas into the chamber below the packed bed unit, and a cleaned oxidizable combustion gas discharge unit on a top of the packed bed column comprising a duct for discharging the cleaned oxidizable combustion gas and preferably placed after a mist eliminator.

3. The process as claimed in claim 1 or 2, wherein the washing water to oxidizable combustion gas ratio in the packed bed in step (a) is between 3.5 and 6.5 L/Nm³, preferably said ratio is between 4.5 and 5.5 L/Nm³, most preferably said ratio is approximately 5.1 L/Nm³; and/or wherein the mean residence time of the combustion gas in the packed bed in step (a) is between 3.4 and 5.8 s, preferably between 4.1 and 5.1 s.

4. The process as claimed in any of claims 1 to 3, wherein the packed bed has a total (wet) contact surface, i.e. the total surface of the (wet) packed bed can be in contact with the oxidizable combustion gas, between 0.09 and 0,15 m²/(Nm³/h), preferably between 0,11 and 0,13 m²/(Nm³/h); and/or wherein the packed bed scrubber arrangement is operated at near atmospheric pressure, preferably between 0.02 to 0.2 barg, in particular between 0.06 to 0.1 barg; and/or wherein the temperature inside the packed bed is between ambient temperature and 70 °C, in particular between 35 and 55 °C.

5. The process as claimed in claim 1, wherein the spray scrubber arrangement comprises a column comprising a spray section unit comprising at least four independent spray stages distributed along a height of the column and composed of a set of nozzle units located on multiple ramps and distributing of the washing water in the form of droplets, wherein the oxidizable combustion gas is fed through a gas feeding unit into the column below the spray section unit, wherein the washing water is collected in a washing water collecting unit arranged at a bottom end of the spray scrubber arrangement below the spray section unit and the gas feeding unit, said washing water reservoir unit comprising a duct for draining the washing water containing cyanide and chloride compounds from the spray scrubber arrangement, and wherein the cleaned oxidizable combustion gas is passed through a mist eliminator before being discharged in an oxidizable combustion gas discharge unit on a top of the spray column comprising a duct for discharging the cleaned oxidizable combustion gas.

6. The process as claimed in any of claims 1 and 5, wherein the flow of oxidizable combustion gas within the spray scrubber arrangement is regulated by deviating part of the flow of oxidizable combustion gas through a by-pass external to the column unit.

7. The process as claimed in any of claims 1 and 5 to 6, wherein the global ratio of washing water distributed in the different spray stages to oxidizable combustion gas in step (a) is between 0.8 and 2.9 L/Nm³, depending on the amount of cyanide and chloride compounds to be removed and on the desired removal and in order to manage the concentration of cyanides and chloride compounds in the washing water, preferably said ratio is between 1.3 and 1.5 L/Nm³; and/or wherein a mean residence time of the oxidizable combustion gas in the spray section unit in step (a) is between 2 and 8 s, preferably between 3 and 4 s.

8. The process as claimed in any of claims 1 and 5 to 7, wherein the nozzles of the spray scrubber arrangements are axial flow full cone nozzles providing droplets having a Sauter mean diameter between 1100 and 1150 µm through a proper setup of the nozzle pressure; and/or wherein the spray scrubber arrangement is operated at near atmospheric pressure, such as at 0.03 to 0.2 barg, preferably between 0.06 to 0.1 barg; and/or wherein the temperature inside the spray column is below the water boiling temperature, preferably between ambient temperature and 70 °C, in particular between 35 and 55 °C.

9. The process as claimed in any of claims 1 to 8, comprising the further step of:
(d) feeding the washing water from step (b) to a dust abatement unit to reduce dust contents of the oxidizable combustion gas upstream of the scrubber arrangement in step (a),
(e) collecting dust abatement water from step (d) containing the dust abated in the dust abatement unit;
preferably wherein a base is added to the washing water before step (d), said base being preferably chosen among oxides and hydroxides of alkali metals and alkaline earth metals, in particular among NaOH, KOH, Ca(OH)₂ or mixtures thereof, most preferably the base is NaOH, which is added to reach a pH between 9.75 and 11, which prevents the free cyanides volatilization.

10. The process as claimed in claim 9, further comprising the step (f) of treating the washing water from step (b) to remove cyanide compounds, in particular free cyanides, and/or the step (g) for further removing residual cyanide from the blowdown of the cleaning process of dust abatement water from step (e).

11. The process as claimed in any one of claims 1 to 10, further comprising an oxidation step for cyanide removal from washing water based on the use of H₂O₂ and a Cu catalyst, carried out in two continuously mixed reactor arrangements in series, wherein each reactor arrangement preferably comprises a vertical tank including, an impeller unit, an impeller engine unit, a baffle unit for agitation and for preventing formation of a vortex, a duct for feeding washing water to a washing water feeding unit, placed near to the top of the vertical tank unit, a duct placed at the bottom of the vertical tank unit for draining the treated washing water, said washing water outlet unit, and reagents and catalyst feeding units placed at the top of the reactor arrangement; preferably wherein a residence time of the washing water in the continuously mixed reactor arrangements is between 40 and 65 minutes for the first reactor arrangement and 45 and 85 minutes for the second reactor arrangement, preferably 50 minutes for the first reactor arrangement and 60 minutes for the second reactor arrangement.

12. The process as claimed in claim 11, wherein H₂O₂ dosage is comprised between 0.35-0.55 g of H₂O₂ (30% wt.) per liter of washing water; and/or wherein Cu-based catalyst is dosed in order to have a concentration of 40 mg/L of Cu²⁺ in the washing water.

13. The process as claimed in any one of claims 11 to 12, wherein pitched blade impellers with blade angle of 45° are used with an impeller speed between 20 and 25 rpm; and/or wherein the reactor is operated at atmospheric pressure and at 30°C.

14. A process for operating a metallurgical plant, wherein an oxidizable combustion gas from a metallurgical reactor, in particular a blast furnace gas from a blast furnace, having been cleaned by a process as claimed in any of claims 1 to 13 is (h) fed to a hot blast stove unit and burned in said hot blast stove unit arranged for preheating blast blown into said metallurgical reactor, wherein the temperature of the burning of the cleaned oxidizable combustion gas is managed to control NOₓ emissions released to atmosphere.

15. The process as claimed in claim 14, wherein (i) the preheated blast is injected into the metallurgical reactor, in particular the blast furnace.

## Patentansprüche

1. Verfahren zum Betreiben einer Einheit zur Reinigung von oxidierbaren Brenngasen in einer metallurgischen Anlage, umfassend die Schritte :
(a) Leiten eines oxidierbaren Brenngases von einem metallurgischen Reaktor, insbesondere eines Hochofengases von einem Hochofen, in eine Festbettwäscheranordnung durch ein Festbett im Gegenstrom mit einem Waschwasser oder in eine Sprühwäscheranordnung, um Cyanidverbindungen, insbesondere Cyanwasserstoff, zu entfernen und um die Entfernung von Chloridverbindungen, insbesondere Chlorwasserstoff, aus dem Brenngas zu erhöhen, indem die Cyanid- und Chloridverbindungen in dem Waschwasser solubilisiert werden,
(b) Sammeln des Waschwassers, das solubilisierte Cyanid- und Chloridverbindungen enthält, an einem Bodenende der Festbett- oder Sprühwäscheranordnung, und
(c) Sammeln eines gereinigten oxidierbaren Brenngases an einem oberen Teil der Festbett- oder Sprühwäscheranordnung,
wobei eine Base dem Waschwasser vor Schritt (a) zugegeben wird, wobei die Base vorzugsweise aus Oxiden und Hydroxiden von Alkalimetallen und Erdalkalimetallen, insbesondere aus NaOH, KOH, Ca(OH)₂ oder Gemischen davon, ausgewählt ist, wobei die Base am meisten bevorzugt NaOH ist, die zwischen 3,5 % und 6,5 %, vorzugsweise zwischen 4,5 % und 5,5 % über der stöchiometrischen Menge in Bezug auf die Cyanid- und Chloridverbindungen, insbesondere Cyanwasserstoff und Chlorwasserstoff, die aus dem oxidierbaren Brenngas zu entfernen sind, zugegeben wird.

2. Verfahren nach Anspruch 1, wobei die Festbettwäscheranordnung eine Säule umfasst, die eine zufällig gepackte Festbetteinheit umfasst, optional eine Vielzahl von Festbettzonen umfasst, die durch Umverteilungszonen getrennt sind, wobei die Festbetteinheit von mindestens einer perforierten Trägerplatte getragen wird, wobei ein Waschwassersprühstrahlverteiler über dem Festbett zum Verteilen des Waschwassers in die Festbetteinheit eingerichtet ist, wobei eine Waschwassersammeleinheit an dem Bodenende der Festbettwäscheranordnung unter dem Festbett eingerichtet ist, wobei die Waschwassersammeleinheit einen Kanal zum Ablassen des Waschwassers, das Cyanidverbindungen enthält, aus der gepackten Wäscheranordnung umfasst, wobei eine Gaszuführeinheit zum Zuführen des oxidierbaren Brenngases in die Kammer unter der Festbetteinheit eingerichtet ist, und wobei eine Einheit zum Ableiten von gereinigtem oxidierbarem Brenngas an einem oberen Teil der Festbettsäule einen Kanal zum Ableiten des gereinigten oxidierbaren Brenngases umfasst und vorzugsweise hinter einem Tropfenabscheider platziert ist.

3. Verfahren nach Anspruch 1 oder 2, wobei das Verhältnis von Waschwasser zu oxidierbarem Brenngas in dem Festbett in Schritt (a) zwischen 3,5 und 6,5 L/Nm³ liegt, vorzugsweise das Verhältnis zwischen 4,5 und 5,5 L/Nm³ liegt, am meisten bevorzugt das Verhältnis ungefähr 5,1 L/Nm³ beträgt ; und/oder wobei die mittlere Verweilzeit des Brenngases in dem Festbett in Schritt (a) zwischen 3,4 und 5,8 s, vorzugsweise zwischen 4,1 und 5,1 s liegt.

4. Verfahren nach einem der Ansprüche 1 bis 3, wobei das Festbett eine gesamte (nasse) Kontaktoberfläche, d. h. die gesamte Oberfläche des (nassen) Festbetts kann in Kontakt mit dem oxidierbaren Brenngas sein, zwischen 0,09 und 0,15 m²/(Nm³/h), vorzugsweise zwischen 0,11 und 0,13 m²/(Nm³/h) aufweist; und/oder wobei die
Festbettwäscheranordnung bei fast atmosphärischem Druck betrieben wird, vorzugsweise zwischen 0,02 bis 0,2 barg, insbesondere zwischen 0,06 und 0,1 barg; und/oder wobei die Temperatur innerhalb des Festbetts zwischen Umgebungstemperatur und 70 °C, insbesondere zwischen 35 und 55 °C liegt.

5. Verfahren nach Anspruch 1, wobei die Sprühwäscheranordnung eine Säule umfasst, die eine Sprühabschnitteinheit umfasst, die mindestens vier unabhängige Sprühstufen umfassen, die entlang einer Höhe der Säule verteilt sind und sich aus einem Satz von Düseneinheiten zusammensetzen, die sich auf mehreren Rampen befinden und das Waschwasser in der Form von Tropfen verteilen, wobei das oxidierbare Brenngas durch eine Gaszuführeinheit in die Säule unter der Sprühabschnitteinheit zugeführt wird, wobei das Waschwasser in einer Waschwassersammeleinheit gesammelt wird, die an einem Bodenende der Sprühwäscheranordnung unter der Sprühabschnitteinheit und der Gaszuführeinheit eingerichtet ist, wobei die Waschwassersammeleinheit einen Kanal zum Ablassen des Waschwassers, das Cyanid- und Chloridverbindungen enthält, aus der Sprühwäscheranordnung umfasst, und wobei das gereinigte oxidierbare Brenngas durch einen Tropfenabscheider geleitet wird, bevor es in einer Einheit zum Ableiten von gereinigtem oxidierbarem Brenngas an einem oberen Teil der Sprühsäule abgeleitet wird, die einen Kanal zum Ableiten des gereinigten oxidierbaren Brenngases umfasst.

6. Verfahren nach einem der Ansprüche 1 und 5, wobei die Strömung von oxidierbarem Brenngas innerhalb der Sprühwäscheranordnung durch Ablenken eines Teils der Strömung von oxidierbarem Brenngas durch einen Bypass, der extern zu der Säuleneinheit ist, reguliert wird.

7. Verfahren nach einem der Ansprüche 1 und 5 bis 6, wobei das allgemeine Verhältnis von Waschwasser, das in den unterschiedlichen Sprühstufen verteilt wird, zu oxidierbarem Brenngas in Schritt (a) zwischen 0,8 und 2,9 L/Nm³ liegt, in Abhängigkeit von der zu entfernenden Menge von Cyanid- und Chloridverbindungen und von der gewünschten Entfernung und um die Konzentration von Cyaniden und Chloridverbindungen in dem Waschwasser zu regeln, wobei vorzugsweise das Verhältnis zwischen 1,3 und 1,5 L/Nm³ liegt; und/oder wobei eine mittlere Verweilzeit des oxidierbaren Brenngases in der Sprühabschnitteinheit in Schritt (a) zwischen 2 und 8 s, vorzugsweise zwischen 3 und 4 s liegt.

8. Verfahren nach einem der Ansprüche 1 und 5 bis 7, wobei die Düsen der Sprühwäscheranordnungen Axialströmungsvollkegeldüsen sind, die Tropfen mit einem Sauterdurchmesser zwischen 1100 und 1150 µm durch eine korrekte Einstellung des Düsendrucks bereitstellen ; und/oder wobei die Sprühwäscheranordnung bei fast atmosphärischem Druck betrieben wird, wie bei 0,03 bis 0,2 barg, vorzugsweise zwischen 0,06 bis 0,1 barg ; und/oder wobei die Temperatur innerhalb der Sprühsäule unter der Wassersiedetemperatur liegt, vorzugsweise zwischen Umgebungstemperatur und 70 °C, insbesondere zwischen 35 und 55 °C.

9. Verfahren nach einem der Ansprüche 1 bis 8, umfassend den weiteren Schritt :
(d) Zuführen des Waschwassers von Schritt (b) zu einer Entstaubungseinheit, um Staubgehalt des oxidierbaren Brenngases stromaufwärts von der Wäscheranordnung in Schritt (a) zu verringern,
(e) Sammeln von Entstaubungswasser von Schritt (d), das den in der Entstaubungseinheit entstaubten Staub enthält ;
vorzugsweise wobei eine Base dem Waschwasser vor Schritt (d) zugegeben wird, wobei die Base vorzugsweise aus Oxiden und Hydroxiden von Alkalimetallen und Erdalkalimetallen, insbesondere aus NaOH, KOH, Ca(OH)₂ oder Gemischen davon, ausgewählt ist, wobei die Base am meisten bevorzugt NaOH ist, die zugegeben wird, um einen pH-Wert zwischen 9,75 und 11 zu erreichen, was die Verflüchtigung von freien Cyaniden verhindert.

10. Verfahren nach Anspruch 9, ferner umfassend den Schritt (f) eines Behandelns des Waschwassers von Schritt (b), um Cyanidverbindungen, insbesondere freie Cyanide, zu entfernen, und/oder den Schritt (g) zum weiteren Entfernen von Restcyanid aus dem Ausblasen des Reinigungsverfahrens von Entstaubungswasser von Schritt (e).

11. Verfahren nach einem der Ansprüche 1 bis 10, ferner umfassend einen Oxidierungsschritt zur Cyanidentfernung aus Waschwasser auf der Basis der Verwendung von H₂O₂ und eines Cu-Katalysators, der in zwei kontinuierlich gemischten Reaktoranordnungen in Reihe ausgeführt wird, wobei jede Reaktoranordnung vorzugsweise einen vertikalen Tank umfasst, der eine Rührereinheit, eine Rührermotoreinheit, eine Leitblecheinheit zum Umrühren und zum Verhindern einer Bildung eines Wirbels, einen Kanal zum Zuführen von Waschwasser zu einer Waschwasserzuführeinheit, nahe dem oberen Teil der vertikalen Tankeinheit platziert, einen Kanal, der an dem Boden der vertikalen Tankeinheit platziert ist, zum Ablassen des behandelten Waschwassers, die Waschwasserauslasseinheit und Reagenzien- und Katalysatorzuführeinheiten einschließt, die an dem oberen Teil der Reaktoranordnung platziert sind ; wobei vorzugsweise eine Verweilzeit des Waschwassers in den kontinuierlich gemischten Reaktoranordnungen zwischen 40 und 65 Minuten für die erste Reaktoranordnung und zwischen 45 und 85 Minuten für die zweite Reaktoranordnung liegt, vorzugsweise 50 Minuten für die erste Reaktoranordnung und 60 Minuten für die zweite Reaktoranordnung beträgt.

12. Verfahren nach Anspruch 11, wobei eine H₂O₂-Zudosierung zwischen 0,35 und 0,55 g H₂O₂ (30 Gew.-%) pro Liter Waschwasser liegt ; und/oder wobei Cu-basierter Katalysator zudosiert wird, um eine Konzentration von 40 mg/L Cu²⁺ in dem Waschwasser aufzuweisen.

13. Verfahren nach einem der Ansprüche 11 bis 12, wobei Schrägblattrührer mit einem Blattwinkel von 45° mit einer Rührergeschwindigkeit zwischen 20 und 25 U/min verwendet werden ; und/oder wobei der Reaktor bei atmosphärischem Druck und bei 30 °C betrieben wird.

14. Verfahren zum Betreiben einer metallurgischen Anlage, wobei ein oxidierbares Brenngas von einem metallurgischen Reaktor, insbesondere ein Hochofengas von einem Hochofen, das durch ein Verfahren nach einem der Ansprüche 1 bis 13 gereinigt wurde, (h) zu einer Winderhitzereinheit zugeführt und in der Winderhitzereinheit verbrannt wird, die zum Vorerhitzen eines Windstoßes eingerichtet ist, der in den metallurgischen Reaktor geblasen wird, wobei die Temperatur des Verbrennens des gereinigten oxidierbaren Brenngases geregelt wird, um NOₓ-Emissionen zu kontrollieren, die in die Atmosphäre freigesetzt werden.

15. Verfahren nach Anspruch 14, wobei (i) der vorerhitzte Windstoß in den metallurgischen Reaktor, insbesondere den Hochofen, eingeblasen wird.

## Revendications

1. Procédé de fonctionnement d'une unité d'épuration de gaz de combustion oxydable dans une usine métallurgique, comprenant les étapes de :
(a) passage d'un gaz de combustion oxydable provenant d'un réacteur métallurgique, en particulier un gaz de haut fourneau provenant d'un haut fourneau, dans un agencement de lavage à lit garni à travers un lit garni à contre-courant avec une eau de lavage ou dans un agencement de lavage par pulvérisation pour éliminer les composés cyanurés, en particulier le cyanure d'hydrogène, et pour augmenter l'élimination des composés chlorés, en particulier le chlorure d'hydrogène, dudit gaz de combustion par solubilisation desdits composés cyanurés et chlorés dans ladite eau de lavage,
(b) collecte de l'eau de lavage contenant des composés cyanurés et chlorés solubilisés à une extrémité inférieure de l'agencement de lavage à lit garni ou par pulvérisation, et
(c) collecte d'un gaz de combustion oxydable épuré au sommet de l'agencement de lavage à lit garni ou par pulvérisation,
dans lequel une base est ajoutée à l'eau de lavage avant l'étape (a), ladite base étant de préférence choisie parmi les oxydes et les hydroxydes de métaux alcalins et de métaux alcalino-terreux, en particulier parmi la NaOH, la KOH, le Ca(OH)₂ ou leurs mélanges, de manière préférée entre toutes la base est la NaOH, qui est ajoutée entre 3,5 % et 6,5 %, de préférence entre 4,5 % et 5,5 %, au-dessus de la quantité stœchiométrique par rapport aux composés cyanurés et chlorés, en particulier le cyanure d'hydrogène et le chlorure d'hydrogène, à éliminer du gaz de combustion oxydable.

2. Procédé selon la revendication 1, dans lequel l'agencement de lavage à lit garni comprend, une colonne comprenant une unité de lit garni aléatoire, comprenant éventuellement une pluralité de zones de lit garni séparées par des zones de redistribution, l'unité de lit garni étant supportée par au moins une plaque de support perforée, un distributeur de pulvérisation d'eau de lavage disposé au-dessus dudit lit garni pour distribuer l'eau de lavage dans l'unité de lit garni, une unité de collecte d'eau de lavage disposée à l'extrémité inférieure de l'agencement de lavage à lit garni sous le lit garni, ladite unité de collecte d'eau de lavage comprenant un conduit pour vidanger l'eau de lavage contenant des composés cyanurés de l'agencement de lavage à garnissage, une unité d'alimentation en gaz disposée pour alimenter le gaz de combustion oxydable dans la chambre sous l'unité de lit garni, et une unité d'évacuation de gaz de combustion oxydable épuré au sommet de la colonne à lit garni comprenant un conduit pour évacuer le gaz de combustion oxydable épuré et de préférence placé après un éliminateur de brouillard.

3. Procédé selon la revendication 1 ou 2, dans lequel le rapport de l'eau de lavage au gaz de combustion oxydable dans le lit garni à l'étape (a) est compris entre 3,5 et 6,5 L/Nm³, de préférence ledit rapport est compris entre 4,5 et 5,5 L/Nm³, de manière préférée entre toutes ledit rapport est d'environ 5,1 L/Nm³ ; et/ou dans lequel le temps de séjour moyen du gaz de combustion dans le lit garni à l'étape (a) est compris entre 3,4 et 5,8 s, de préférence entre 4,1 et 5,1 s.

4. Procédé selon l'une quelconque des revendications 1 à 3, dans lequel le lit garni présente une surface de contact totale (humide), c'est-à-dire que la surface totale du lit garni (humide) peut être en contact avec le gaz de combustion oxydable, entre 0,09 et 0,15 m²/(Nm³/h), de préférence entre 0,11 et 0,13 m²/(Nm³/h) ; et/ou dans lequel l'agencement de lavage à lit garni fonctionne à une pression proche de la pression atmosphérique, de préférence entre 0,02 et 0,2 barg, en particulier entre 0,06 et 0,1 barg ; et/ou dans lequel la température à l'intérieur du lit garni est comprise entre la température ambiante et 70 °C, en particulier entre 35 et 55 °C.

5. Procédé selon la revendication 1, dans lequel l'agencement de lavage par pulvérisation comprend une colonne comprenant une unité de section de pulvérisation comprenant au moins quatre étages de pulvérisation indépendants répartis sur la hauteur de la colonne et composés d'un ensemble d'unités de buses situées sur de multiples rampes et distribuant l'eau de lavage sous forme de gouttelettes, dans lequel le gaz de combustion oxydable est alimenté à travers une unité d'alimentation en gaz dans la colonne en dessous de l'unité de section de pulvérisation, dans lequel l'eau de lavage est collectée dans une unité de collecte d'eau de lavage disposée à une extrémité inférieure de l'agencement de lavage par pulvérisation en dessous de l'unité de section de pulvérisation et de l'unité d'alimentation en gaz, ladite unité de collecte d'eau de lavage comprenant un conduit pour vidanger l'eau de lavage contenant les composés cyanurés et chlorés de l'agencement de lavage par pulvérisation, et dans lequel le gaz de combustion oxydable épuré passe à travers un éliminateur de brouillard avant d'être évacué dans une unité d'évacuation de gaz de combustion oxydable au sommet de la colonne de pulvérisation comprenant un conduit pour évacuer le gaz de combustion oxydable épuré.

6. Procédé selon l'une quelconque des revendications 1 et 5, dans lequel le flux de gaz de combustion oxydable à l'intérieur de l'agencement de lavage par pulvérisation est régulé en déviant une partie du flux de gaz de combustion oxydable à travers une dérivation externe à l'unité colonne.

7. Procédé selon l'une quelconque des revendications 1 et 5 à 6, dans lequel le rapport global de l'eau de lavage distribuée dans les différents étages de pulvérisation au gaz de combustion oxydable à l'étape (a) est compris entre 0,8 et 2,9 L/Nm³, en fonction de la quantité de composés cyanurés et chlorés à éliminer et de l'élimination souhaitée et afin de gérer la concentration de composés cyanurés et chlorés dans l'eau de lavage, de préférence ledit rapport est compris entre 1,3 et 1,5 L/Nm³ ; et/ou dans lequel un temps de séjour moyen du gaz de combustion oxydable dans l'unité de section de pulvérisation à l'étape (a) est compris entre 2 et 8 s, de préférence entre 3 et 4 s.

8. Procédé selon l'une quelconque des revendications 1 et 5 à 7, dans lequel les buses des agencements de lavage par pulvérisation sont des buses à cône plein à écoulement axial produisant des gouttelettes ayant un diamètre moyen de Sauter compris entre 1 100 et 1 150 µm grâce à un réglage approprié de la pression de la buse ; et/ou dans lequel l'agencement de lavage par pulvérisation fonctionne à une pression proche de la pression atmosphérique, par exemple entre 0,03 et 0,2 barg, de préférence entre 0,06 et 0,1 barg ; et/ou dans lequel la température à l'intérieur de la colonne de pulvérisation est inférieure à la température d'ébullition de l'eau, de préférence entre la température ambiante et 70 °C, en particulier entre 35 et 55 °C.

9. Procédé selon l'une quelconque des revendications 1 à 8, comprenant l'étape supplémentaire de :
(d) alimentation de l'eau de lavage de l'étape (b) à une unité de dépoussiérage afin de réduire la teneur en poussière du gaz de combustion oxydable en amont de l'agencement de lavage à l'étape (a),
(e) collecte de l'eau de dépoussiérage de l'étape (d) contenant la poussière traitée dans l'unité de dépoussiérage ;
de préférence dans lequel une base est ajoutée à l'eau de lavage avant l'étape (d), ladite base étant de préférence choisie parmi les oxydes et les hydroxydes de métaux alcalins et de métaux alcalino-terreux, en particulier parmi la NaOH, la KOH, le Ca(OH)₂ ou leurs mélanges, de manière préférée entre toutes la base est la NaOH, qui est ajoutée pour atteindre un pH compris entre 9,75 et 11, ce qui empêche la volatilisation des cyanures libres.

10. Procédé selon la revendication 9, comprenant en outre l'étape (f) de traitement de l'eau de lavage provenant de l'étape (b) pour éliminer les composés cyanurés, en particulier les cyanures libres, et/ou l'étape (g) pour éliminer davantage de cyanure résiduel de la purge issue du procédé d'épuration de l'eau de dépoussiérage provenant de l'étape (e).

11. Procédé selon l'une quelconque des revendications 1 à 10, comprenant en outre une étape d'oxydation pour l'élimination du cyanure de l'eau de lavage basée sur l'utilisation de H₂O₂ et d'un catalyseur au Cu, réalisée dans deux agencements de réacteurs à agitation continue, en série, dans lequel chaque agencement de réacteur comprend de préférence un réservoir vertical comprenant, une unité turbine, une unité moteur de turbine, une unité de déflecteurs pour l'agitation et pour empêcher la formation d'un vortex, un conduit pour alimenter l'eau de lavage à une unité d'alimentation en eau de lavage, placé près du sommet de l'unité réservoir vertical, un conduit placé au fond de l'unité réservoir vertical pour vidanger l'eau de lavage traitée, ladite unité de sortie d'eau de lavage, et des unités d'alimentation en réactifs et en catalyseur placées au sommet de l'agencement de réacteur ; de préférence dans lequel un temps de séjour de l'eau de lavage dans les agencements de réacteur à agitation continue est compris entre 40 et 65 minutes pour le premier agencement de réacteur et entre 45 et 85 minutes pour le second agencement de réacteur, de préférence 50 minutes pour le premier agencement du réacteur et 60 minutes pour le second agencement du réacteur.

12. Procédé selon la revendication 11, dans lequel le dosage de H₂O₂ est compris entre 0,35 et 0,55 g de H₂O₂ (30 % en poids) par litre d'eau de lavage ; et/ou dans lequel le catalyseur à base de cuivre est dosé de manière à obtenir une concentration de 40 mg/L de Cu²⁺ dans l'eau de lavage.

13. Procédé selon l'une quelconque des revendications 11 à 12, dans lequel des turbines à pales inclinées avec un angle de pale de 45 ° sont utilisées avec une vitesse d'agitation comprise entre 20 et 25 tr/min ; et/ou dans lequel le réacteur fonctionne à la pression atmosphérique et à 30 °C.

14. Procédé de fonctionnement d'une usine métallurgique, dans lequel un gaz de combustion oxydable provenant d'un réacteur métallurgique, en particulier un gaz de haut fourneau provenant d'un haut fourneau, ayant été épuré par un procédé selon l'une quelconque des revendications 1 à 13, est (h) introduit dans une unité cowper et brûlé dans ladite unité cowper disposée pour préchauffer le vent soufflé dans ledit réacteur métallurgique, dans lequel la température de la combustion du gaz de combustion oxydable épuré est régulée pour contrôler les émissions de NOₓ rejetées dans l'atmosphère.

15. Procédé selon la revendication 14, dans lequel (i) le vent préchauffé est injecté dans le réacteur métallurgique, en particulier le haut fourneau.
